# EUROPEAN PATENT SPECIFICATION

(11) **EP 1 228 508 B1**
(45) Date of publication and mention of the grant of the patent: **02.05.2003**
(21) Application number: 00980301.6
(22) Date of filing: 10.11.2000
(51) Int. Cl.: G11B 27/00, G11B 27/10, G11B 19/02, G11B 27/11, G06F 17/30, H04N 7/16

(54) **EDITING AND SHARING SYSTEM FOR REWRITABLE DISK MEDIA**
EDITIER UND TEILUNGSVERFAHREN FÜR WIEDEREINSCHREIBBARE PLATTEN
SYSTEME D'EDITION ET DE PARTAGE POUR SUPPORT DE DISQUE REINSCRIPTIBLE

(30) Priority: 10.11.1999 US 164793 P; 15.05.2000 US 204304 P
(43) Date of publication of application: 07.08.2002
(73) Proprietor: Thomson Licensing S.A., 92648 Boulogne Cedex (FR)
(72) Inventor: FITZPATRICK, John, James, Indianapolis, IN 46228 (US)
(74) Representative: Berthier, Karine
(86) International application number: US0030725
(87) International publication number: WO01035410

(56) References cited:
- EP-A- 0 450 841
- EP-A- 0 910 088
- WO-A-00/05715
- WO-A-98/25269
- WO-A-99/63525
- US-A- 5 751 672
- US-A- 5 987 525

## Description

The inventive arrangements relate generally to methods and apparatus creating and sharing edit points files used to customize video and/or audio digital programs recorded on disk media, for example recordable digital video disks, hard drives and magneto optical disks.

Various devices have been developed to enable consumers to record video and/or audio programs for later presentation. Such devices include tape recorders, video cassette recorders, recordable compact disks, and most recently, recordable digital video disks (DVD). Hard drives and magneto optical disks have also been used.

As of this time no uniform industry standard has been adopted for recordable DVDs. The acronyms DVD-RAM, DVD-RW and DVD+RW are also used generally to refer to the respective rewritable technologies. Reference herein to rewritable DVD technology, devices and methods is generally intended to encompass all of the standards which are now being used, as well as those which may be developed in the future.

Depending upon the standard that is eventually adopted, if any, certain recording schemes used to implement various advanced features will be compatible with all devices adhering to the standard, whereas other recording schemes may prove to be incompatible due to inconsistencies with the standard. Nevertheless, a particular proprietary advanced feature incompatible with other devices can still be very desirable from a consumer's point of view. The result is merely that a recording made in accordance with an incompatible advanced feature cannot be played back on the device of a different manufacturer, even if conventional recordings are fully compatible and portable.

In many cases, the program presentations are recorded in the viewer and/or listener's absence, for presentation at a later, more convenient time. This is referred to as time shifting the program. At other times, a program is being viewed and/or listened to without being recorded, and without any interest in a recording, but the viewer's and/or listener's attention is interrupted, for example by a telephone call or an unexpected visitor. If the viewer and/or listener is watching a television program, for example, and has a cassette tape in a VCR, or can retrieve and load such a cassette tape quickly, the program can be recorded. However, the viewer and/or listener cannot view and/or listen to the program in its entirety, and in a proper time sequence, until after the recording has been completed. The time to completion of the recording can be short or long, depending on the length of the program.

Although rewritable DVD technology is generally available, operation is limited to such basic functions as play, record, fast forward reverse and stop. Pause is available, but only as a counterpart to pause operation in a VCR, for example interrupting the play back of a prerecorded program or interrupting the recording of a viewed program to eliminate commercials from the recording. Unlike computer hard drives, recordable DVD devices have a very significant additional function, which is playing back prerecorded DVD's. Thus, there is an economic incentive to develop rewritable DVD technology, including methods and devices, that can be used instead of a computer hard drive. It is a challenge to provide such devices with improved, advantageous features without compromising the goal of decreasing costs and increasing sales.

Rewritable DVD technology typically uses MPEG-2 encoders and decoders and many acronyms are encountered that are related to MPEG-2. The DVD standard, for example, calls for the video content of the disk to be divided up into video object units (VOBU's) in which each VOBU contains 0.4 to 1.0 seconds of presentation material. Each VOBU starts off with a navigation pack (NV_PCK or NAV_PACK). The navigation pack contains various navigation information, some of which is very useful for trick modes. The navigation pack includes presentation control information (PCI) and data search information (DSI). One example is the inclusion of the start addresses for many of the nearby VOBU's. This can facilitate jumping to the next VOBU forward or backward, or for a faster trick mode, to the second VOBU forward or backward, or to the third, etc. Another example is the inclusion of the end address for the first three reference pictures in the VOBU. This is the only clue given as to the structure of the VOBU.

Each video object set (VOBS) includes a plurality of video objects. Each video object includes a plurality of cells. Each cell includes a plurality of VOBU's. Each of the VOBU's contains about 0.4 to 1.0 seconds of presentation material. A typical VOBU in a commercial movie contains 0.5 second of presentation material, corresponding to one group of pictures (GOP). Each VOBU is a sequence of packs in recording order. Each VOBU starts with exactly one navigation pack and encompasses all of following kinds of packs, including a video pack (V_PCK), an audio pack (A_PCK) and a sub-picture pack (SP_PCK).

Data search information (DSI) helps the decoder find reference pictures within the VOBU corresponding to the current Nav_Pack. DSI also helps the decoder to find VOBU's far into the future or past, relative to the current VOBU. The VOBU's in the past relative to the current VOBU presentation are referenced in fields of the Nav_Pack known as the BWDI (backward information). The VOBU's in the future relative to the current VOBU presentation are referenced in fields of the Nav_Pack known as FWDI (forward information). One example is the inclusion of the start addresses for many of the nearby VOBU's, up to +240 VOBU forward and -240 VOBU backward directions. This can facilitate jumping to the next VOBU forward or backward, or for a faster trick mode, to the second VOBU forward or backward, or to the third, etc.

The video, audio, subpicture, presentation control information and data search information are the five kinds of packetized elementary streams (PES).

The various features and characteristics described above make it possible for programs to be recorded, re-recorded or simply played back in an edited form. It is known, for example, that movies on DVD disks can be manufactured such that, as played back, the viewer can select different levels of violence, sexual content and profanity. It is possible, and indeed desirable, that viewers can edit such programs according to their own likes and desires, even when desired criteria do not correspond to the preprogrammed choices. Moreover, it is desirable that viewers can share their personally edited versions with others having similar tastes or concerns. Simply providing copies of edited programs can raises copyright concerns. There is a need to provide a method for sharing such personally edited programs that is easy to implement and does not raise legal concerns.

In accordance with the inventive arrangements, the problems described above are overcome by methods and apparatus for creating and sharing the personal editing control files, hereinafter referred to as edit points files, making it unnecessary to share the actual programs. Advantageously, edit points files can be transferred between viewers, for example over the Internet, by modem to modem connections, or in the context of a private network including a digital home network. An Internet server, for example, can be advantageously used as a central storage location to which personal edit points files can be uploaded from viewers and from which the personal edit points files can be downloaded by other viewers.

Figure 1 is a block diagram of a rewritable DVD device that can be provided with one or more advance operating features in accordance with the inventive arrangements.

Figure 2 is a diagram useful for illustrating a system for creating, editing, storing and sharing edit points files in accordance with the inventive arrangements.

Figure 3 illustrates a typical Table of edit points files in accordance with the inventive arrangements.

Figure 4 is a flow chart illustrating the steps for creating, editing edit points files and providing a customized program sequence in accordance with the inventive arrangements.

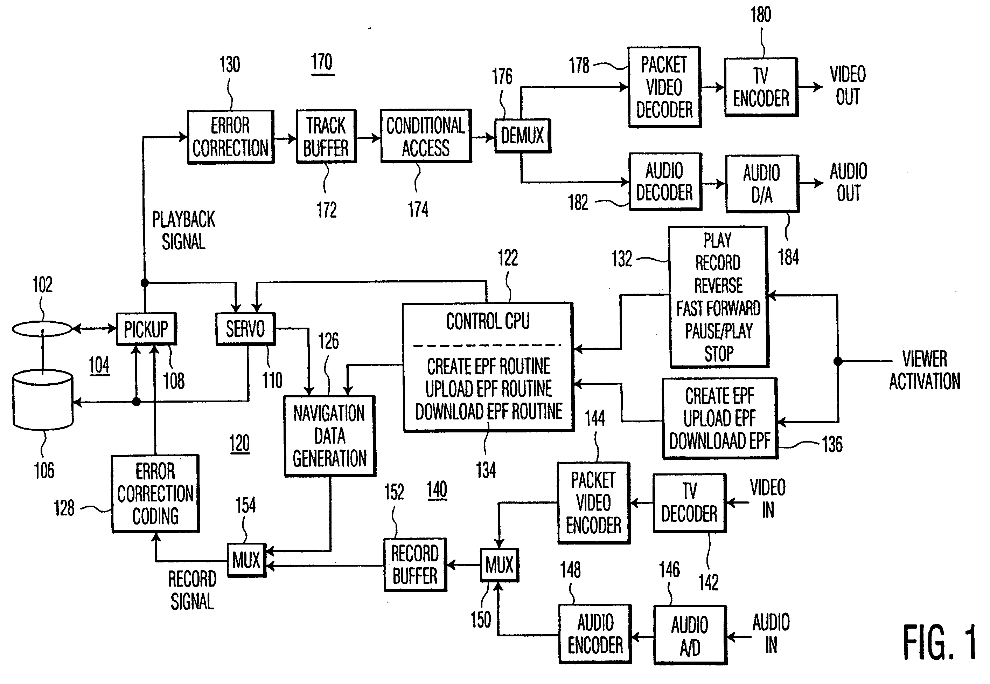

Device 100 for implementing the various advanced operating features in accordance with the inventive arrangements taught herein utilizes rewritable disk medium 102 in accordance with the inventive arrangements is shown in block diagram form in Figure 1. Rewritable disk medium 102 is embodied as a rewritable DVD in the illustrated embodiment. In many instances, as will be noted, the rewritable disk medium can also be, for example, a hard drive or a magneto optical disk (MOD). An example of a MOD is a minidisk. In many instances, the inventive arrangements are applicable to video or audio or both video and audio.

Device 100 is capable of writing onto and reading from the disk medium, in this example, a rewritable DVD 102. Device 100 comprises mechanical assembly 104, control section 120, video/audio input processing path 140 and video/audio output processing path 170. The allocation of most of the blocks to different sections or paths is self-evident, whereas the allocation of some of the blocks is made for purposes of convenience and is not critical to understanding the operation of the device.

Mechanical assembly 104 comprises motor 106 for spinning DVD 102 and pickup assembly 108 that is adapted to be moved over the spinning disk. A laser on pickup assembly 108 burns spots onto a spiral track on the disk or illuminates spots already burned onto the track for recording and playing back video and/or audio program material. For purposes of understanding the invention, it is irrelevant whether the disk is recordable on one or two sides, or in the event of a double-sided recording, whether the double-sided recording, or subsequent reading from the disk, takes place from the same side of the disk or from both sides. The pickup and the motor are controlled by servo 110. Servo 110 also receives the Playback Signal of data read from the spiral track of disk 102 as a first input. The Playback Signal is also an input to error correction circuit 130, which can be considered part of the control section or part of the video/audio output processing path.

Control section 120 comprises control central processing unit (CPU) 122 and navigation data generation circuit 126. Control CPU 122 supplies a first input signal to navigation data generation circuit 126 and servo 110 supplies a second input signal to navigation data generation circuit 126. The servo can also be considered part of the control section. Navigation data generation circuit 126 supplies a first input signal to multiplexer (MUX) 154, which forms part of video/audio input processing path 140. The output of MUX 154 is an input to error correction coding circuit 128. The output of error correction coding circuit 128 is a recordable input signal supplied to pickup 108, which will be "burned" onto the spiral track of disk 102 by the laser.

Control buffer 132 for viewer activatable functions indicates those functions presently available, namely play, record, reverse, fast forward, pause/play and stop. The pause is a counterpart to pause operation in a VCR, for example manually interrupting the play back of a prerecorded program or interrupting the recording of a viewed program to eliminate commercials from the recording. A separate buffer 136 is provided to receive commands for implementing the creation, uploading and downloading of an edit points files (EPF). Buffers 132 and 136 can be combined.

Video/audio input processing path 140 is a signal processing circuit for converting a conventional television signal, for example NTSC or PAL, into digitized packet data, for example MPEG-1 or MPEG-2, for digital recording by device 100. Input path 140 comprises NTSC decoder 142 and video encoder, for example MPEG-1 or MPEG-2, 144 for video in, and comprises audio analog-to-digital converter (A/D) 146 and audio encoder, for example MPEG-1 or MPEG-2, 148. The digitized signals are combined in multiplexer 150 and stored in record buffer 152 until an entire packet has been constructed. As each packet is constructed, each packet is combined with the output of the navigation data generation circuit in MUX 154 and sent to error correction coding circuit 128. Error correction coding circuit 128 can also be deemed to be part of input path 140.

As a practical matter, the smallest addressable unit on the spiral track of a DVD is an ECC (error correction code) block of 16 sectors, where each sector includes 2048 bytes of user data. A group is an integer number of EEC blocks, for example 12. Each group of blocks represents approximately 0.5 seconds of combined video and audio program material. The amount of linear space along the spiral track needed to record a group of EEC blocks, for example 192 sectors, is defined herein as a segment of the spiral track. One segment of data can correspond, for example, to approximately 0.5 seconds of audio and video program material.

Output processing path 170 comprises track buffer, or output buffer, 172, in which data read from the disk is assembled into packets for further processing. The packets are processed by conditional access circuit 174 that controls propagation of the packets through demultiplexer 176 and into respective paths for video and audio processing.

The video is decoded by decoder 178, for example from MPEG-1 or MPEG-2, and encoded as a conventional television signal, for example NTSC or PAL. The audio is decoded by circuit 182, for example from MPEG-1 or MPEG-2, and converted to analog form by audio digital-to-analog (D/A) converter 184. Output processing path 170 can be deemed to include error correction circuit 130, as noted.

Each nearly circular, radially concentric section of the spiral is sometimes referred to as a track, but this terminology is not commonly accepted as having that specific meaning. In CD-ROM's, for example, the term track is also used to refer to that portion of the spiral track that contains a single audio song, or other selection, and the same may or may not become common for DVD's.

It will be appreciated that the advanced features taught herein are applicable to other kinds of disk media and disk media players and recorders.

In the present invention, DVD movies and digital audio data can be seamlessly cut, pasted and displayed in a form determined by user preference using edit point files. The edit point files control device 100 to, for example, turn on/off video, audio and subpictures, and jump to various points in the program sequence. Furthermore, the edit information can be stored in remote computers, storage devices and DVD players and transferred to a particular DVD player through digital communication.

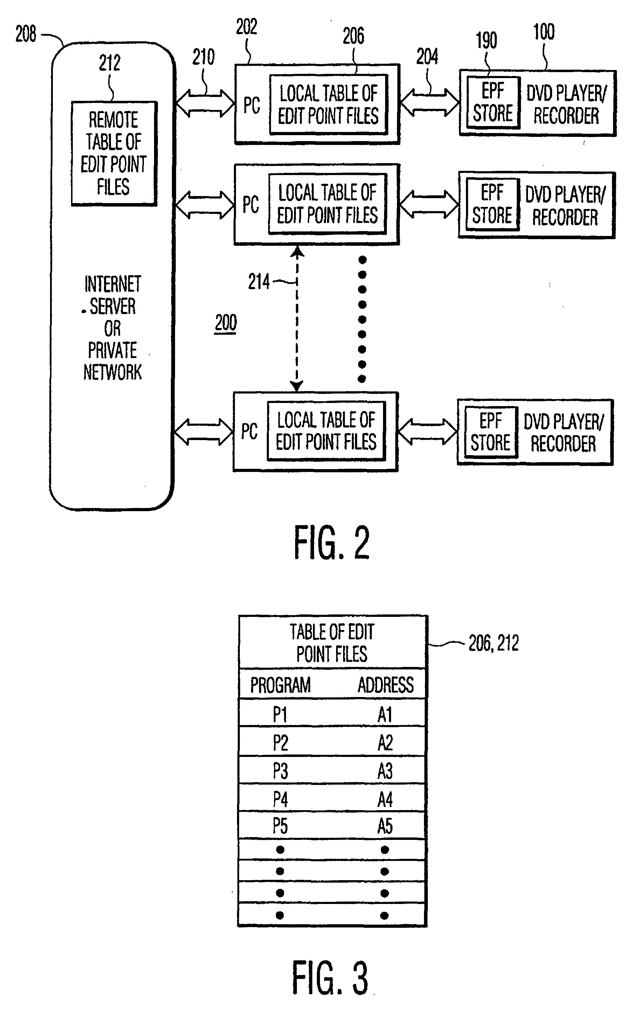

Fig. 2 illustrates system 200 for creating and sharing edit point files for customizing playback of video/audio programs stored on disk 102. System 200 includes a plurality of devices 100 coupled to respective PCs 202, which are in turn coupled to remote device 208. The devices may be coupled to each other using any one of a plurality of communication interfaces known to those skilled in the art, including, but not limited to firewire, RS232, USB, or IRDa.

PCs 202 perform various control and interfacing functions between devices 100 and remote device 208 including, requesting, storing, displaying, processing, and transferring the edit point files. The local table of edit points stored in PC 202 is illustrated in Fig. 3, wherein the table identifies each stored program, comprising a particular edit point file, and its corresponding address location. PCs 202 may also be used to generate and edit the edit point files. Although the present embodiment includes separate PCs 202, it is to be understood that the functions performed by PCs 202 may be incorporated into devices 100 by including the necessary communications and processing elements into devices 100.

Remote device 208 comprises any one of a plurality of devices or systems that can be coupled to device 100 via digital communication and used to receive, store and transfer edit point files therebetween. In the present embodiment, remote device 208 comprises a server coupled to PCs 202 via the internet, whereby the edit point files can be made publicly accessible and easily transferable between remote device 208 and devices 100. Remote device 208 may also comprise a server connected via a private network, including a digital home network.

The edit point files are stored in memory 190 of each device 100 and are used to customize the playback of programs on disk 102 according to user preference. A user may create an edit point file by providing edit point queues at the desired points of the program. Edit selections can be made using a remote control device having editing keys, such as video/audio/subpicture edit keys, included thereon, or using an OSD menu provided by device 100. An edit summary with thumbnail sketches of edit entry points may be displayed on a television display. Device 100 receives edit point queues from player controls and/or remote and generates an edit point file in response in accordance with software stored therein.

The table below outlines a sample edit point data format for generating the customized playback sequence.

| Material Index | Type of Edit | Address |
|---|---|---|
| I1 | T1 | A1 |
| I2 | T2 | A2 |
| I3 | T3 | A3 |
| I4 | T4 | A4 |

The type of edit refers to the nature of the edit, for example, a video edit start, which may correspond to a blank screen or a freeze, a video edit stop, an audio edit start, or an audio edit stop. The material index corresponds to the reference point in the material where the edit begins or ends. Such a reference point could be a time reference to material play, i.e., title:hours:minutes:seconds:fraction of seconds, or MPEG header numbers, or any other means of referencing the sequence of visual and/or audio material. The address corresponds to the location in memory where these array points are stored.

Control CPU 122 executes a create edit point file routine stored in memory 134 to generate the desired edit point file. The edits may be stored in link lists in the memory and associated to the title of the movie. The edit point files are stored in a non-volatile storage media and indexed to the program title so a user will have the option of using the previously stored edit point files during subsequent playback of the program. When a user places a disc in a device 100, device 100 reads the title and asks whether the user would like to use an existing edit point file. As the movie or audio disc is playing the user can update or enter new edit points into device 100. Advantageously, Windows CE may be introduced into device 100 such that these edit capabilities can be integrated into a Windows application. This application will use standard desktop video editing techniques to achieve the edited product. At all times this editing is carried out through the DIVX and CSS decryption so that the content is never in the clear.

Additionally, the edit point files may be locked with a password so that the edit point files will be automatically used, or not used, during subsequent playback of the program. Once the edit point file is in place and the user has made the appropriate selections, the presentation of the program will occur omitting the video, audio, and/or subpictures as specified by the edit point files. Edit points in the edit point files can be removed individually or globally.

The edit points can be transferred from one device 100 to another using various communication interfaces, including fire wire, RS232, USB, IRda or modems. These communication interfaces can also be used to connect device 100 to PCs 202, as well as remote device 208, that will streamline the editing process and the saving and downloading of edit points. As shown in Fig. 2, a remote table of edit point files may be kept on remote device 208 on the internet. When the user is interested, he can download the desire edit point files to his home PC 202 and then, via RS232 or some other prearranged communications protocol, to device 100. Similarly, the user may create and upload an edit point file from device 100 to remote device 208, via PC 202. In this regard, control CPU 122 executes a download/upload EPF routine stored in memory 134 in response to a download/upload request from the user.

In the present embodiment, the editing information necessary to generate a customized playback is transferred to and stored in a memory device of device 100. Once the editing information has been transferred, device 100 monitors the playback status and generates the necessary editing commands to seamlessly provide a customized playback sequence without further commands from home PC 202 or remote device 208.

In an alternative embodiment, the editing information may be transferred to home PC 202, wherein home PC 202 monitors the playback status and sends the required commands, during appropriate moments of the playback, to provide the customized playback. In such a case, home PC 202 keeps track of real time via the RS232 port and when PC 202 notes that an edit point is coming up, PC 202 sends a command to attached device 100 to perform the required editing step, such as seamlessly jumping to the next edit point. Again, the functions of PC 202 may be incorporated into device 100, such that the real time monitoring of playback and issuance of editing commands may be performed directly between device 100 and remote device 208.

It can be seen that by using the present invention, new edit files may be devised and made publicly accessible by a many different entities, including, individual consumers, an organization that previews and provides the edits as a service, a bulletin board participant, or an employee of a web-based service.

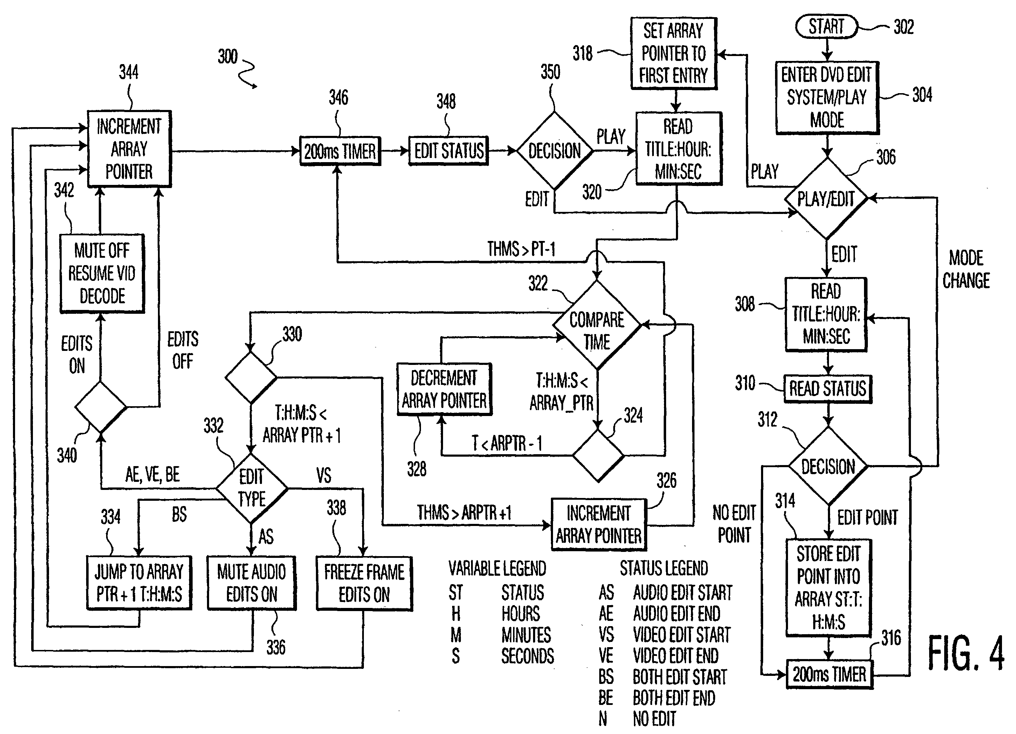

Fig. 4 is a flowchart illustrating the control of device 100 in creating an edit point file and playing back a program in accordance with an edit point file. In step 306, device 100 determines whether the user has selected a play mode or an edit mode. If in the edit mode, device 100 reads the time of the program playback sequence in step 308. In step 310, device 100 reads the edit status to determine whether the user has selected an edit command, such as by pressing a video/audio/subpicture edit key or changing the edit mode. In step 312, if the user has selected a mode change, method 300 returns to step 306. If the user has not selected an edit point or a mode change, method 300 goes to step 316 to wait for a 200ms timer to elapse, and then returns to step 308. If the user has selected an edit point, method 300 goes to step 314 and stores the information associated with the edit point into the edit point file. The edit information includes: the edit status, i.e., audio start/stop, video start/stop, subpicture start/stop, and audio and video start/stop; track; hour; minute; and second. Once the edit information is stored, method 300 waits for the 200 ms timer to elapse and continues by returning to step 308.

If the play mode is selected in step 304, method 300 goes to step 318, wherein the array pointer is set to a first edit point entry. In step 320, device 100 reads the current playback information including title, hour, minute and second. In step 322, device 100 compares the current playback information with the first edit point entry. If the current playback information is not past the first array pointer entry, method 300 determines in step 324 whether the current playback information is past the pointer entry that immediately precedes the first array pointer entry. If not, the array pointer is decremented by one in step 328, and method 300 returns to step 322. If so, method 300 goes to step 346 without making any changes to the array pointer.

If the current playback information is past the first array pointer entry as determined in step 322, method 300 goes to step 330 to determine whether the current playback information is past the pointer entry immediately following the first array pointer entry. If not, method 300 increments the array pointer by one in step 326 and returns to step 322. If so, method 300 checks the edit type specified in step 332, and then performs the particular one of the edit steps 334, 336, and 338 as required. If an end edit command is specified, method 300 determines the current edits that should be ended. Here, method 300 turns off the mute, resumes the video, or resumes the subpictures as required in step 342.

At this point, method 300 decrements the array pointer by one in step 344 and waits for the 200 ms timer to elapse in step 346. In step 348, device 100 checks the edit status to determine whether the user has requested a change in the operating mode. In step 350, method 300 goes to step 306 if the user has selected the edit mode. If the play mode is maintained, method 300 reads the current playback information in step 320 and repeats the steps for turning on/off the edits as described above.

It will be apparent to those skilled in the art that although the present invention has been described in terms of an exemplary embodiment, modifications and changes may be made to the disclosed embodiment without departing from the essence of the invention. For example, the edit file may be created, and shared to remove commercials in recordable devices. Therefore, it is to be understood that the present invention is intended to cover all modifications as would fall within the true scope and spirit of the present invention.

## Claims

1. A method for presenting digital video data, comprising the steps of:
receiving digital video data from a first data storage medium; and
displaying a program included in the digital video data in accordance with editing information associated with the program, **characterized by**
requesting and receiving, from a publicly accessible storage medium, edit information associated with the program, and
processing the digital video data in accordance with the edit information to thereby display an edited program sequence.

2. The method according to claim 1, further **characterized by** the step of
storing the edit information in a second data storage medium that is coupled to a means for processing the digital video data.

3. The method according to claim 2, **characterized in that** the storing step comprises storing the edit information in a non-volatile storage medium, and further **characterized by** the step of
determining whether a user selected program has associated edit information stored in the non-volatile storage medium, and if so, automatically processing the user selected program in accordance with the associated edit information stored on the non-volatile storage medium.

4. The method according to claim 3, further **characterized by** the step of
allowing the user to override the automatic processing by entering a password.

5. The method according to claim 4, further **characterized by** the steps of
displaying the associated edit information in a user viewable form, and
allowing the user to select portions of the associated edit information to be used during playback of the digital video data.

6. The method according to claim 2, further **characterized by** the steps of
transmitting playback position information to the publicly accessible storage medium as the digital video data is being processed, and
receiving and storing edit information transmitted by the publicly accessible storage medium in response to the transmitted playback position information.

7. The method according to claim 1, further **characterized by** the steps of
displaying a plurality of edit information sets associated with the program and available from the publicly accessible storage medium, and
requesting a user selected ones of the plurality of edit information sets from the publicly accessible storage medium.

8. The method according to claim 1, further **characterized by** the steps of
displaying the edit information in a user viewable form, and allowing the user to select portions of the edit information to be used during processing of the digital video data.

9. The method according to claim 1, further **characterized by** the steps of
receiving user entered edit information, and
transmitting the user entered edit information to the publicly accessible storage medium.

10. The method according to claim 1, **characterized in that** the publicly accessible storage medium comprises a server connected to the internet.

11. The method according to claim 1, **characterized in that** the edit information includes one of blank video command, audio mute command, blank subpicture command, and jump in time command.

12. The method according to claim 1, **characterized in that** the step of receiving the edit information comprises receiving the edit information via one of firewire, RS232, USB and IRda.

13. A method for presenting digital video data stored on a first data storage medium that is coupled to a private network, including a digital home network, comprising the steps of:
receiving digital video data from the first data storage medium; and
displaying a program included in the digital video data in accordance with editing information associated with the program, **characterized by**
requesting, from a second storage medium that is also coupled to the private network, edit information associated with the digital video data;
receiving and storing the edit information in a third storage medium; and
processing the digital video data in accordance with the edit information stored in the third storage medium to provide a program output.

14. The method according to claim 13, further **characterized by** the steps of
displaying a plurality of edit information available from the second storage medium,
receiving a user selection of one of the plurality of edit information, and
requesting the user selection from the second storage medium.

15. The method according to claim 13, further **characterized by** the steps of
displaying the edit information in a user viewable form, and allowing the user to select portions of the edit information to be used during processing of the digital video data.

16. The method according to claim 13, **characterized in that** the receiving and storing step comprises storing the edit information in a non-volatile storage medium, and further **characterized by** the step of:
determining whether a user selected digital video data has associated edit information stored in the non-volatile storage medium, and if so, automatically processing the user selected digital video data in accordance with the associated edit information stored on the non-volatile storage medium.

17. The method according to claim 13, further **characterized by** the steps of
receiving user entered edit information, and
transmitting the user entered edit information to the second storage medium.

18. The method according to claim 13, further **characterized by** the steps of transmitting playback position information to the second storage medium as the digital video data is being processed, and receiving and storing edit information transmitted by the second storage medium in response to the transmitted playback position information.

19. The method according to claim 13, **characterized in that** the step of receiving the edit information comprises receiving the edit information via one of firewire, RS232, USB and IRda.

20. A method for managing at a publicly accessible site editorial information related to digital video and/or audio programs, comprising the steps of:
receiving a user transmitted file request; and
transmitting the requested file, **characterized by**
receiving from at least one remote site an edit points file containing editorial information related to any digital video and/or audio program edited at the at least one remote site;
storing the edit points file at the publicly accessible site;
enabling remote access to the stored indexed edit points file from any other remote site; and,
transmitting the edit points file to the any other remote site responsive to a request from the remote sites.

21. The method of claim 20, further **characterized by** the steps of:
receiving a plurality of said edit points files from a plurality of the remote sites;
storing all of the edit points files;
indexing the stored edit points files;
enabling remote access to all of the stored indexed edit points files; and,
transmitting requested ones of the edit points files to different ones of the remote sites.

22. The method of claim 21, further **characterized by** the step of
storing for each of the edit points files a corresponding program title and editing strategy.

23. The method of claim 22, further **characterized by** the step of
managing the publicly accessible site from an internet server.

## Patentansprüche

1. Verfahren zur Darstellung von digitalen Videodaten mit folgenden Schritten:
Empfang digitaler Videodaten von einem ersten Datenspeichermedium und
Wiedergabe eines in den digitalen Videodaten enthaltenen Programms entsprechend Ausgabeinformationen für das Programm,
**gekennzeichnet durch**
Anforderung und Empfang von Ausgabeinformationen für das Programm von einem öffentlich zugänglichen Speichermedium,
Verarbeitung der digitalen Videodaten entsprechend den Ausgabeinformationen, um **dadurch** eine ausgegebene Programmfolge wiederzugeben.

2. Verfahren nach Anspruch 1, **gekennzeichnet durch** den Schritt der
Speicherung der Ausgabeinformationen in einem zweiten Datenspeichermedium, das mit einem Mittel zur Verarbeitung der digitalen Videodaten verbunden ist.

3. Verfahren nach Anspruch 2, **dadurch gekennzeichnet, dass** der Speicherschritt die Speicherung der Ausgabeinformationen in einem nichtflüchtigen Speichermedium enthält, **gekennzeichnet durch** den Schritt der
Ermittlung, ob ein vom Benutzer gewähltes Programm in dem nichtflüchtigen Speichermedium gespeicherte Ausgabeinformationen enthält und, wenn das der Fall ist, automatische Verarbeitung des vom Benutzer gewählten Programms entsprechend den auf dem nichtflüchtigen Speichermedium gespeicherten Ausgabeinformationen.

4. Verfahren nach Anspruch 3, **gekennzeichnet durch** den Schritt der
Ermöglichung für den Benutzer, die automatische Verarbeitung **durch** Eingabe eines Paßworts aufzuheben.

5. Verfahren nach Anspruch 4, **gekennzeichnet durch** den Schritt der
Wiedergabe der zugehörigen Ausgabeinformationen in einer für den Benutzer ansehbaren Form und
Ermöglichung, dass der Benutzer Teile der zugehörigen Ausgabeinformationen zur Benutzung während der Wiedergabe der digitalen Videodaten wählt.

6. Verfahren nach Anspruch 2, **gekennzeichnet durch** folgende Schritte:
Übertragung der Wiedergabe-Lageinformationen zu dem öffentlich zugänglichen Speichermedium, wenn die digitalen Videodaten verarbeitet werden, und
Empfang und Speicherung der **durch** das öffentlich zugängliche Speichermedium übertragenen Ausgabeinformationen aufgrund der übertragenen Wiadergabe-Lageinformationen.

7. Verfahren nach Anspruch 1, **gekennzeichnet durch** folgende Schritte:
Wiedergabe von mehreren Sätzen von Ausgabeinformationen für das Programm, die von dem öffentlich zugänglichen Speichermedium verfügbar sind, und
Anforderung eines vom Benutzer gewählten Satzes der mehreren Ausgebeinformationen-Sätze von dem öffentlich zugänglichen Speichermedium.

8. Verfahren nach Anspruch 1, **gekennzeichnet durch** folgende Schritte:
Wiedergabe der Ausgabeinformationen in einer **durch** den Benutzer ansehbaren Form und Ermöglichung, dass der Benutzer Teile der Ausgabeinformationen zur Benutzung während der Verarbeitung der digitalen Videodaten wählt.

9. Verfahren nach Anspruch 1, **gekennzeichnet durch** folgende Schritte:
Empfang der vom Benutzer eingegebenen Ausgabeinformationen und
Übertragung der vom Benutzer eingegebenen Ausgabeinformationen zu dem öffentlich zugänglichen Speichermedium.

10. Verfahren nach Anspruch 1, **dadurch gekennzeichnet, dass** das öffentlich zugängliche Speichermedium einen mit dem Internet verbundenen Server enthält.

11. Verfahren nach Anspruch 1, **dadurch gekennzeichnet, dass** die Ausgabeinformationen einen Befehl für ein schwarzes Video, einen Befehl für eine Audiostummschaltung, einen Befehl für ein schwarzes Unterbild oder einen Befehl zum Zeitspringen enthalten.

12. Verfahren nach Anspruch 1, **dadurch gekennzeichnet, dass** der Schritt zum Empfang der Ausgabeinformationen den Empfang der Ausgabeinformationen über einen firewire, RS232, USB und Irda, enthält.

13. Verfahren zur Darstellung von digitalen Videodaten, die auf einem ersten Datenspeichermedium gespeichert sind, das mit einem privaten Netz verbunden ist, mit einem digitalen Heimnetz mit folgenden Schritten:
Empfang der digitalen Videodaten von dem ersten Datenspeichermedium und
Wiedergabe eines in den digitalen Videodaten enthaltenen Programms entsprechend den Ausgabeinformationen für das Programm, **gekennzeichnet durch**
Anforderung von einem zweiten Speichermedium, das ebenfalls mit dem privaten Netz verbunden ist, von Ausgabeinformationen für die digitalen Videodaten,
Empfang und Speicherung der Ausgabeinformationen in einem dritten Speichermedium und
Verarbeitung der digitalen Videodaten entsprechend den in dem dritten Speichermedium gespeicherten Ausgabeinformationen zur Lieferung eines Programmausgangs.

14. Verfahren nach Anspruch 13, **gekennzeichnet durch** folgende Schritte:
Wiedergabe von mehreren Ausgabeinformationen, die von dem zweiten Speichermedium verfügbar sind,
Empfang einer Benutzerwahl einer der mehreren Ausgabeinformationen und
Anforderung der Benutzerwahl von dem zweiten Speichermedium.

15. Verfahren nach Anspruch 13, **gekennzeichnet durch** die folgenden Schritte:
Wiedergabe der Ausgabeinformationen in einer von dem Benutzer ansehbaren Form und Ermöglichung, dass der Benutzer Teile der Ausgabeinformationen für die Benutzung während der Verarbeitung der digitalen Videodaten wählt.

16. Verfahren nach Anspruch 13, **dadurch gekennzeichnet, dass** der Empfang und der Speicherschritt die Speicherung der Ausgabeinformationen in einem nichtflüchtigen Speichermedium enthält, **gekennzeichnet durch** folgenden Schritt:
Ermittlung, ob vom Benutzer gewählte digitale Videodaten in dem nichtflüchtigen Speichermedium gespeicherte zugehörige Ausgabeinformationen enthält und, wenn das der Fall ist, automatische Verarbeitung der vom Benutzer gewählten digitalen Videodaten entsprechend den auf dem nichtflüchtigen Speichermedium gespeicherten zugehörigen Ausgabeinformationen.

17. Verfahren nach Anspruch 13, **gekennzeichnet durch** folgende Schritte:
Empfang der vom Benutzer eingegebenen Ausgabeinformationen und
Übertragung der vom Benutzer eingegebenen Ausgabeinformationen zu dem zweiten Speichermedium.

18. Verfahren nach Anspruch 13, **gekennzeichnet durch** die Schritte der Übertragung der Wiedergabe-Lageinformationen zu dem zweiten Speichermedium, wenn die digitalen Videodaten verarbeitet werden, und Empfang und Speicherung der **durch** das zweite Speichermedium übertragenen Ausgabeinformationen aufgrund der übertragenen Wiedergabe-Lageinformationen.

19. Verfahren nach Anspruch 13, **dadurch gekennzeichnet, dass** der Schritt des Empfangs der Ausgabeinformationen den Empfang der Ausgabeinformationen über einen der firewire RS232; USB und IRda enthält.

20. Verfahren zur Verwaltung von öffentlich zugänglichen Site-Ausgabeinformationen für die digitalen Video- und/oder Audioprogramme mit folgenden Schritten:
Empfang einer vom Benutzer übertragenen Dateianforderung und
Übertragung der angeforderten Datei, **gekennzeichnet durch**
Empfang von wenigstens einer entfernten Seite einer Ausgabepunkt-Datei mit Ausgabeinformationen für ein beliebiges digitales Video- und/oder Audioprogramm, das an der am wenigsten entfernten Seite ausgegeben wird,
Speicherung der Ausgabepunkt-Datei an der öffentlich zugänglichen Seite,
Ermöglichung eines Fernzugriffs zu der gespeicherten, indizierten, Ausgabepunkt-Datei von irgendeiner anderen entfernten Seite und
Übertragung der Ausgabepunkt-Datei zu der beliebigen anderen entfernten Seite aufgrund einer Anforderung von entfernten Seiten.

21. Verfahren nach Anspruch 20, **gekennzeichnet durch** folgende Schritte:
Empfang mehrerer Ausgabepunkt-Dateien von mehreren entfernten Seiten,
Speicherung aller Ausgabepunkt-Dateien,
Indizierung der gespeicherten Ausgabepunkt-Dateien,
Ermöglichung eines Fernzugriffs zu allen gespeicherten, indizierten Ausgabepunkt-Dateien und
Übertragung der angeforderten Ausgabepunkt-Dateien zu verschiedenen der entfernten Seiten.

22. Verfahren nach Anspruch 21, **gekennzeichnet durch** den Schritt der
Speicherung eines entsprechenden Programmtitels und einer Ausgabestrategie für jede der Ausgabepunkt-Dateien.

23. Verfahren nach Anspruch 22, **gekennzeichnet durch** den Schritt der
Verwaltung der öffentlich zugänglichen Seite von einem Internet-Server.

## Revendications

1. Procédé de présentation de données vidéo numériques, comprenant les étapes de :
réception de données vidéo numériques depuis un premier support de mémorisation de données ; et
affichage d'un programme inclus dans les données vidéo numériques conformément à des informations d'édition associées au programme, **caractérisé par**
la demande et la réception, depuis un support de mémorisation accessible publiquement, d'informations d'édition associées au programme, et
le traitement des données vidéo numériques conformément aux informations d'édition pour ainsi afficher une séquence de programme édité.

2. Procédé selon la revendication 1, **caractérisé en outre par** l'étape de
mémorisation des informations d'édition dans un deuxième support de mémorisation de données qui est couplé à un moyen pour traiter les données vidéo numériques.

3. Procédé selon la revendication 2, **caractérisé en ce que** l'étape de mémorisation comprend la mémorisation des informations d'édition dans un support de mémorisation non volatil, et **caractérisé en outre par** l'étape de
détermination si un programme sélectionné par un utilisateur comporte des informations d'édition associées mémorisées dans le support de mémorisation non volatil, et si c'est le cas, traitement automatique du programme sélectionné par l'utilisateur conformément aux informations d'édition associées mémorisées sur le support de mémorisation non volatil.

4. Procédé selon la revendication 3, **caractérisé en outre par** l'étape de :
autorisation de l'utilisateur à annuler le traitement automatique en entrant un mot de passe.

5. Procédé selon la revendication 4, **caractérisé en outre par** les étapes de
affichage des informations d'édition associées dans une forme visualisable par l'utilisateur, et
autorisation de l'utilisateur à sélectionner des parties des informations d'édition associées à utiliser durant la lecture des données vidéo numériques.

6. Procédé selon la revendication 2, **caractérisé en outre par** les étapes de
transmission d'informations de position de lecture au support de mémorisation accessible publiquement au fur et à mesure que les données vidéo numériques sont traitées, et
réception et mémorisation d'informations d'édition transmises par le support de mémorisation accessible publiquement en réponse aux informations de position de lecture transmises.

7. Procédé selon la revendication 1, **caractérisé en outre par** les étapes de
affichage d'une pluralité d'ensembles d'informations d'édition associés au programme et disponibles à partir du support de mémorisation accessible publiquement, et
demande à un utilisateur d'ensembles sélectionnés de la pluralité d'ensembles d'informations d'édition à partir du support de mémorisation accessible publiquement.

8. Procédé selon la revendication 1, **caractérisé en outre par** les étapes de
affichage des informations d'édition dans une forme visualisable par l'utilisateur, et autorisation de l'utilisateur à sélectionner des parties des informations d'édition à utiliser durant le traitement des données vidéo numériques.

9. Procédé selon la revendication 1, **caractérisé en outre par** les étapes de
réception d'informations d'édition entrées par l'utilisateur, et
transmission des informations d'édition entrées par l'utilisateur au support de mémorisation accessible publiquement.

10. Procédé selon la revendication 1, **caractérisé en ce que** le support de mémorisation accessible publiquement comprend un serveur connecté à Internet.

11. Procédé selon la revendication 1, **caractérisé en ce que** les informations d'édition comportent l'une d'une commande de vidéo supprimée, d'une commande de mise sous silence audio, d'une commande de sous-images supprimées, et d'une commande de saut dans le temps.

12. Procédé selon la revendication 1, **caractérisé en ce que** l'étape de réception des informations d'édition comprend la réception des informations d'édition par l'intermédiaire de l'un de firewire, de RS232, d'USB et d'IRda.

13. Procédé de présentation de données vidéo numériques mémorisées sur un premier support de mémorisation de données qui est couplé à un réseau privé, comportant un réseau domestique numérique, comprenant les étapes de :
réception de données vidéo numériques depuis le premier support de mémorisation de données ; et
affichage d'un programme inclus dans les données vidéo numériques conformément à des informations d'édition associées au programme, **caractérisé par**
la demande, depuis un deuxième support de mémorisation qui est aussi couplé au réseau privé, d'informations d'édition associées aux données vidéo numériques ;
la réception et la mémorisation des informations d'édition dans un troisième support de mémorisation ; et
le traitement des données vidéo numériques conformément aux informations d'édition mémorisées dans le troisième support de mémorisation afin de fournir une sortie de programme.

14. Procédé selon la revendication 13, **caractérisé en outre par** les étapes de
affichage d'une pluralité d'informations d'édition disponibles depuis le deuxième support de mémorisation,
réception d'une sélection par l'utilisateur de l'une de la pluralité des informations d'édition, et
demande de la sélection de l'utilisateur depuis le deuxième support de mémorisation.

15. Procédé selon la revendication 13, **caractérisé en outre par** les étapes de
affichage des informations d'édition dans une forme visualisable par l'utilisateur, et autorisation de l'utilisateur à sélectionner des parties des informations d'édition à utiliser durant le traitement des données vidéo numériques.

16. Procédé selon la revendication 13, **caractérisé en ce que** l'étape de réception et de mémorisation comprend la mémorisation des informations d'édition dans un support de mémorisation non volatil, et **caractérisé en outre par** l'étape de :
détermination si des données vidéo numériques sélectionnées par l'utilisateur ont des informations d'édition associées mémorisées dans le support de mémorisation non volatil, et si c'est le cas, traitement automatique des données vidéo numériques sélectionnées par l'utilisateur conformément aux informations d'édition associées mémorisées sur le support de mémorisation non volatil.

17. Procédé selon la revendication 13, **caractérisé en outre par** les étapes de
réception des informations d'édition entrées par l'utilisateur, et
transmission des informations d'édition entrées par l'utilisateur au deuxième support de mémorisation.

18. Procédé selon la revendication 13, **caractérisé en outre par** les étapes de transmission d'informations de position de lecture au deuxième support de mémorisation au fur et à mesure que les données vidéo numériques sont traitées, et réception et mémorisation des informations d'édition transmises par le deuxième support de mémorisation en réponse aux informations de position de lecture transmises.

19. Procédé selon la revendication 13, **caractérisé en ce que** l'étape de réception des informations d'édition comprend la réception des informations d'édition par l'intermédiaire de l'un de firewire, de RS232, d'USB et d'IRda.

20. Procédé de gestion d'informations éditoriales de sites accessibles publiquement liées à des programmes vidéo et/ou audio numériques, comprenant les étapes de :
réception d'une demande de fichier transmise par un utilisateur ; et
transmission du fichier demandé, **caractérisé par**
la réception depuis au moins un site distant d'un fichier de points d'édition contenant des informations éditoriales liées à n'importe quel programme vidéo et/ou audio numérique édité au niveau de l'au moins un site distant ;
la mémorisation du fichier de points d'édition au niveau du site accessible publiquement ;
l'autorisation d'un accès distant au fichier de points d'édition indexé mémorisé depuis n'importe quel autre site distant ; et
la transmission du fichier de points d'édition à n'importe quel autre site distant en réponse à une demande depuis les sites distants.

21. Procédé selon la revendication 20, **caractérisé en outre par** les étapes de :
réception d'une pluralité desdits fichiers de points d'édition depuis une pluralité des sites distants ;
mémorisation de tous les fichiers de points d'édition ;
indexation des fichiers de points d'édition mémorisés ;
autorisation d'un accès distant à tous les fichiers de points d'édition indexés mémorisés ; et
transmission de fichiers demandés des fichiers de points d'édition à des sites différents des sites distants.

22. Procédé selon la revendication 21, **caractérisé en outre par** l'étape de
mémorisation pour chacun des fichiers de points d'édition d'un titre de programme correspondant et d'une stratégie d'édition.

23. Procédé selon la revendication 22, **caractérisé en outre par** l'étape de
gestion du site accessible publiquement à partir d'un serveur Internet.
